# EUROPÄISCHE PATENTANMELDUNG

(11) **EP 4 779 188 A1**
(43) Veröffentlichungstag der Anmeldung: **22.07.2026**
(21) Anmeldenummer: 25153038.2
(22) Anmeldetag: 21.01.2025
(51) Int. Cl.: F16L 9/18, B29C 65/00, F16L 39/00, F16L 41/02, F16L 43/00, F16L 47/02, F16L 47/28

(54) **DOPPELROHRFITTING**

(71) Anmelder: Georg Fischer Rohrleitungssysteme AG, 8201 Schaffhausen (CH)
(72) Erfinder: Reiz, Robert, 79780 Stühlingen (DE); Wunderle, Daniel, 8280 Kreuzlingen (CH); Pesic, Kresimir, 8200 Schaffhausen (CH); Müller, Hanspeter, 78194 Immendingen (DE); da Conceição Baptista e Silva, Manuel, 8253 Diessenhofen (CH); Breyer, Markus, 78315 Radolfzell (DE)
(74) Vertreter: Fenner, Seraina

(57) **Zusammenfassung**

Verfahren zum Herstellen eines Doppelrohrfittings, wobei das Doppelrohrfitting ein innenliegendes Medium führendes Fitting und ein aussenliegendes, das innenliegende, Medium führende Fitting umgebendes Fitting aufweist, beinhaltend folgende Schritte:
- Bereitstellen eines innenliegenden Fittings,
- Bearbeiten des innenliegenden Fittings durch Abtrennen eines Anschlussstutzens,
- Anordnen des bearbeiteten innenliegenden Fittings in einem aussenliegenden Fitting,
- Anbringen des abgetrennten Anschlussstutzens am im aussenliegenden Fitting bearbeiteten innenliegenden Fitting.

## Beschreibung

Die Erfindung betrifft ein Verfahren zum Herstellen eines Doppelrohrfittings, wobei das Doppelrohrfitting ein innenliegendes Medium führendes Fitting und ein aussenliegendes, das innenliegende, Medium führende Fitting umgebendes Fitting aufweist.

Doppelrohrfittings werden meist hergestellt in dem das die äussere Schale bildende Fitting in der Mitte aufgetrennt wird und das innenliegende Fitting eingelegt wird. Dazu werden jedoch zwei identische Fittings für die Aussenschale benötigt, da beim Auftrennen des Fittings der Verschnitt und Materialverlust beim Verschweissen zu gross ist, als dass die beiden Hälften wieder zusammenfügbar wären um die Aussenschale zu bilden. Aufgrund dessen ist der Materialverbrauch beim Herstellen auf diese Weise sehr gross und dieses Verfahren nur für kleinere Fittings wirtschaftlich anwendbar.

Die EP 0 414 589 A2 offenbart ein Doppelrohrfitting, bei dem die Aussenschale durch separat gebildete Halbschalen, die miteinander verbunden werden, gebildet und vor dem Zusammenfügen das innenliegende Fitting eingelegt wird. Nachteilig dabei ist, dass die einzelnen Hälften dazu speziell hergestellt werden müssen, meist durch Spritzgiessen, womit sich das nur bei hohen Stückzahlen lohnt.

Es ist Aufgabe der Erfindung ein Verfahren zur Herstellung eines Doppelrohrfittings vorzuschlagen, dass für grosse Dimensionen anwendbar ist und sich auch bei kleinen Stückzahlen lohnt.

Diese Aufgabe wird erfindungsgemäss dadurch gelöst, dass das Verfahren folgende Schritte aufweist:
- Bereitstellen eines innenliegenden Fittings,
- Bearbeiten des innenliegenden Fittings durch Abtrennen eines Anschlussstutzens,
- Anordnen des bearbeiteten innenliegenden Fittings in einem aussenliegenden Fitting,
- Anbringen des abgetrennten Anschlussstutzens am im aussenliegenden Fitting bearbeiteten innenliegenden Fitting.

Ein Doppelrohrfitting das ein innenliegendes Medium führendes Fitting und ein aussenliegendes, das innenliegende, Medium führende Fitting umgebendes Fitting, aufweist, wobei die Fittings vorzugsweise aus Kunststoff gebildet sind, werden durch das erfindungsgemässe Verfahren hergestellt, wofür ein Fitting bereitgestellt wird, das im Doppelrohrfitting als innenliegendes Fitting dient. Das im Doppelrohrfitting innenliegende Fitting, wird bevor es in ein umgebendes Fitting eingebracht wird bearbeitet indem beim innenliegenden Fitting ein Anschlussstutzen abgetrennt wird. Vorzugsweise wird bei einem T-Stück der mittlere Anschlussstutzen abgetrennt. Dadurch wird ermöglicht, dass das innenliegende Fitting in ein grösseres, umgebendes Fitting eingebracht werden kann. Nach dem Abtrennen des Anschlussstutzens wird, das bearbeitete innenliegenden Fittings in einem aussenliegenden Fitting angeordnet. Das bearbeitete Fitting kann durch Einschieben über einen Anschlussstutzen des aussenliegenden Fittings in das aussenliegende Fitting eingebracht werden. Anschliessend wird der zuvor abgetrennten Anschlussstutzens am im aussenliegenden Fitting bearbeiteten innenliegenden Fitting angebracht, an der Stelle, an der der Anschlussstutzen zuvor bereits angeordnet war. Es ist vorteilhaft, wenn das aussenliegende Fitting als ein einteiliges Spritzgussteil ausgebildet ist, jedoch kann das aussenliegende Fitting auch durch Rohrleitungssegmente und Rohrleitungsabschnitte zu einem Fitting zusammengeschweisst worden sein. Das innenliegende Fitting ist vorzugweise als einteiliges Spritzgussteil ausgebildet.

Es ist vorteilhaft, wenn der abgetrennte Anschlussstutzen an der abgetrennten Stelle des innenliegenden Fittings angeschweisst wird. Dadurch weist das innenliegend Fitting wieder die Gestalt wie vor der Bearbeitung auf. Zudem passen der Anschlussstutzen und das bearbeitete Fitting genau zusammen, was einen einfachen und exakten Fügevorgang ermöglicht.

Als vorteilhaft hat sich gezeigt, wenn das Abtrennen des Anschlussstutzens entlang einer vorgegebenen Kontur erfolgt. Die Kontur am innenliegenden Fitting entspricht vorzugsweise dem Innenradius des aussenliegenden Fittings und verläuft konzentrisch versetzt zum Mittelpunkt des Durchmessers des innenliegenden Fittings. Vorzugsweise wird die Kontur des Innenradius des aussenliegenden Fittings am T-Stück zum Abtrennen des mittleren Anschlussstutzens angewandt. Durch diese Kontur kann das bearbeitete innenliegende Fitting problemlos in das Aussenfitting eingeschoben werden, da das innenliegende Fitting zum Einschieben über den Anschlussstutzen konzentrisch oder am Innendurchmesser des Aussenfitting aufliegend angeordnet wird und so nirgends am aussenliegenden Fitting aneckt.

Als bevorzugte Ausführungsform hat sich gezeigt, wenn zum Anschweissen des Anschlussstutzens am bearbeiteten innenliegenden Fitting der Anschlussstutzen und das bearbeitete Fitting mittels eines Heizelements erwärmt werden. Es ist vorteilhaft, wenn das Heizelement die Kontur der Trennstelle aufweist, wodurch die Trennstelle am bearbeiteten Fitting und am Anschlussstutzen passgenau erwärmt werden können, da das Fitting und der Anschlussstutzen exakt am Heizelement anliegen.

Als vorteilhaft hat sich gezeigt, wenn das Erwärmen des Anschlussstutzens und des bearbeiten Fittings synchron erfolgt. Dazu weist das Heizelement vorzugsweise an den sich gegenüberliegenden Seiten die Trennkontur auf und kann so zwischen dem bearbeiteten Fitting und dem Anschlussstutzen angeordnet werden, während beide Kunststoffteile erwärmt werden. Nach dem Erreichen der gewünschten Temperatur der Kunststoffteile wird das Heizelement entfernt und das bearbeitete Fitting und der Anschlussstutzen zusammengefügt. Es ist vorteilhaft, wenn das Heizelement und der Anschlussstutzen des innenliegenden Fittings über den Anschlussstutzen des aussenliegenden Fittings eingeführt werden, bis das Heizelement auf das bearbeitete Fitting trifft. In dieser Position werden die beiden Teile dann erwärmt.

Als bevorzugte Ausführungsform hat sich gezeigt, wenn das innenliegende Fitting mit Distanzelementen im aussenliegenden Fitting zentrisch platziert wird. Dies gewährleistet eine exakte Positionierung der Fittings zueinander und erleichtert das Anschliessen des Fittings an eine Doppelrohrleitung.

Als vorteilhaft hat sich gezeigt, wenn an den Anschlussstutzen des innenliegenden Fittings Rohrstücke angeschweisst werden. Dadurch wird erreicht, dass das innenliegende Fitting das aussenliegende Fitting leicht überragt oder zumindest die Stirnseiten der Fittings plan verlaufen, was das Anschliessen in einer Doppelrohrleitung erleichtert. Vorzugsweise wird das Rohrstück bereits angebracht bevor das bearbeitete Fitting im aussenliegenden Fitting angeordnet ist, da eine bessere Zugänglichkeit gewährleistet ist und die angebrachten Rohrstücke das Einbringen des bearbeiteten Fittings in das aussenliegende Fitting nicht behindern. Zusätzlich kann der Innenfitting an den mit Rohrstücken verlängerten Anschlussstutzen positioniert und gehalten werden, ohne dass ein aufwändige Festhaltevorrichtung innerhalb des Aussenfittings angebracht werden muss.

Eine genaue Längenanpassung durch Einkürzen der hervorstehenden Anschlussstutzen ist nach dem Verbinden von Innenfitting und Anschlussstutzen des Innenfitting möglich.

Vorzugsweise weist der Innendurchmesser des innenliegenden Fittings einen Durchmesser von > 200 mm auf.

Vorzugsweise wird das erfindungsgemässe Verfahren zum Herstellen von Doppelrohrfittings die als T-Stück, Bogenstück oder Winkelstück ausgebildet sind, angewandt.

Als bevorzugt hat sich gezeigt, wenn zur Herstellung von Doppelrohrfittings ein innenliegendes Fitting mit einem Aussendurchmesser von 250 mm und ein aussenliegendes Fitting mit einem Aussendurchmesser von 355 mm oder ein innenliegendes Fitting mit einem Aussendurchmesser von 315 mm und ein aussenliegendes Fitting mit einem Aussendurchmesser von 450 mm eingesetzt wird.

Als weitere bevorzugte Ausführungsformen haben sich die Kombination der folgenden Dimensionen gezeigt:

| Innenliegendes Fitting mit Aussendurchmesser | Aussenliegendes Fitting mit Aussendurchmesser |
|---|---|
| 280mm | 355mm |
| 315mm | 400mm |
| 355mm | 450mm |
| 400mm | 500mm |
| 450mm | 560mm |
| 500mm | 630mm |

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1A-1J: die Schritte des erfindungsgemässen Verfahrens zur Herstellung eines Doppelrohrfittings an einem T-Stück,
- Fig. 2: ein durch das erfindungsgemässe Verfahren hergestelltes Doppelrohrfitting als T-Stück ausgebildet,
- Fig. 3: den Schritt des Anbringens des Anschlussstutzens an einem Bogenstück und
- Fig. 4: ein durch das erfindungsgemässe Verfahren hergestelltes Doppelrohrfitting als Bogenstück ausgebildet.

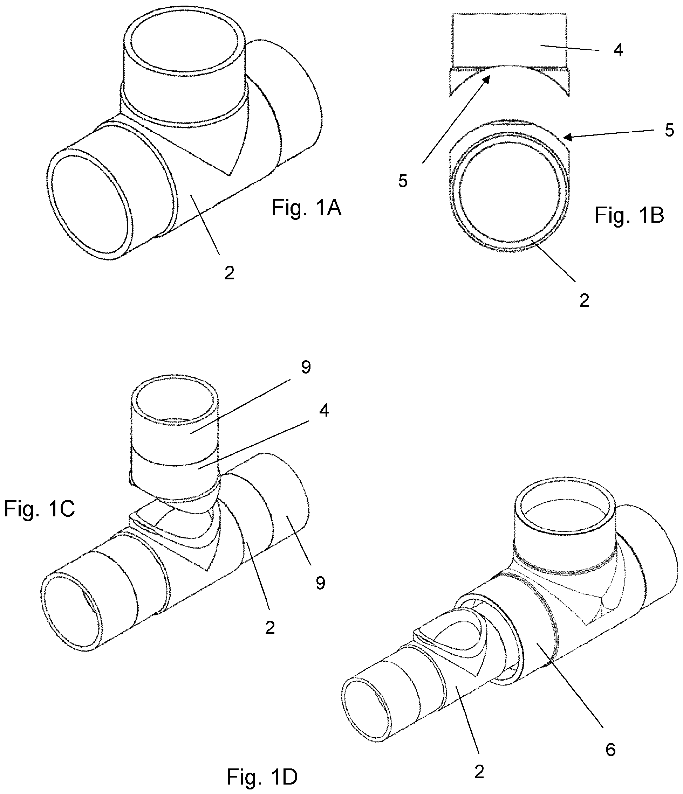

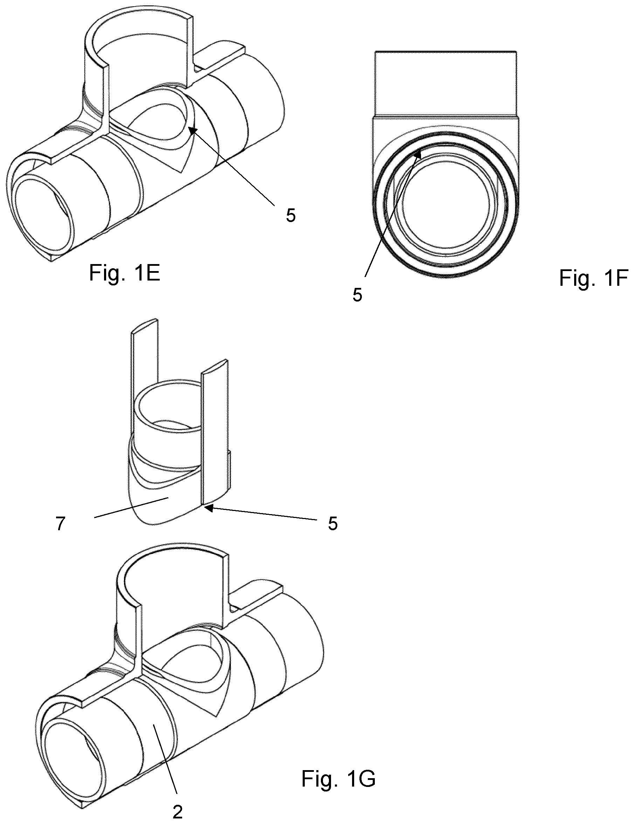

Die in Fig. 1A-1J dargestellten Figuren zeigen das erfindungsgemässe Verfahren zur Herstellung eines Doppelrohrfittings 1 schrittweise dargestellt. Das durch das erfindungsgemässe Verfahren hergestellte Doppelrohrfitting 1 weist ein innenliegendes Medium führendes Fitting 2 und ein aussenliegendes, das innenliegende, Medium führende Fitting 2 umgebendes Fitting 3 auf. Zur Herstellung des erfindungsgemässen Doppelrohrfittings 1 wird ein innenliegendes Medium führendes Fitting 2 bereitgestellt. Das innenliegende Fitting 2 ist vorzugsweise aus Kunststoff hergestellt und vorzugsweise als einteiliges Spritzgussteil ausgebildet.

Das innenliegende Fitting 2 wird anschliessend bearbeitet in dem ein Anschlussstutzen 4 abgetrennt wird. Bei einem T-Stück wird vorzugsweise der mittlere Anschlussstutzen 4 abgetrennt. Es ist vorteilhaft, wenn der Anschlussstutzen 4 entlang einer Kontur 5 wie in Figur 1B und 1C dargestellt abgetrennt wird.

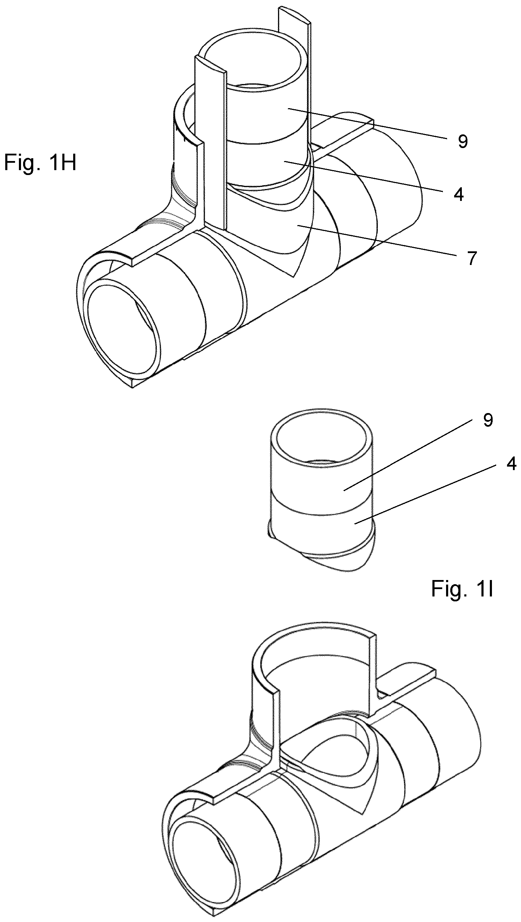

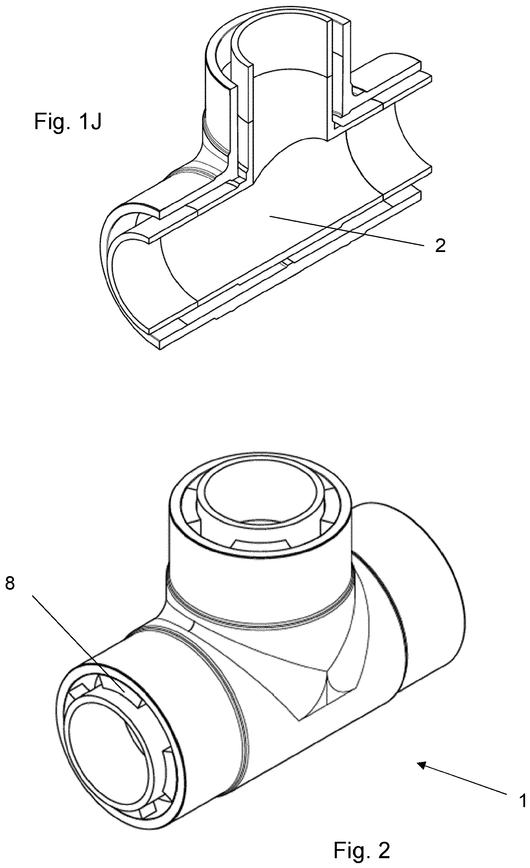

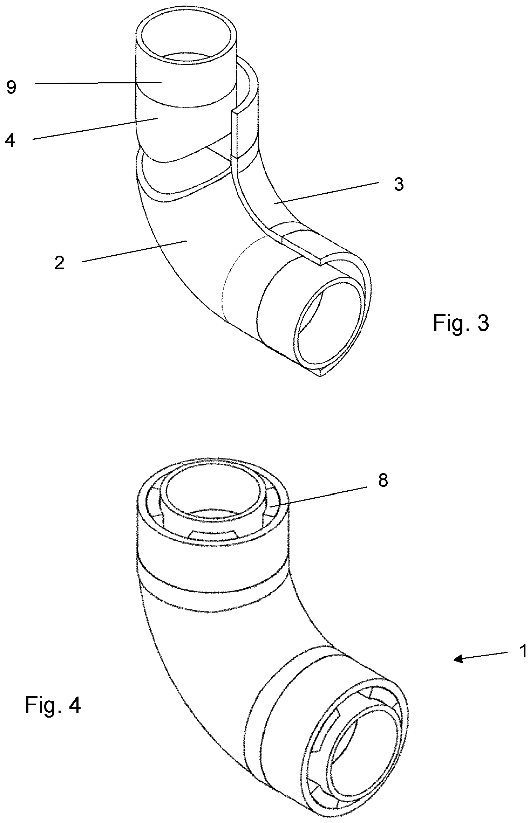

Vorzugsweise entspricht der Verlauf der Kontur 5 dem Innenradius des Aussenfittings 3, was gut aus der Figur 1F ersichtlich ist. Anschliessend wird das bearbeitete Fitting 2 in einem grösseren Fitting 3 angeordnet, welches das aussenliegende Fitting 3 bildet. Dadurch, dass die Kontur 5 dem Verlauf des Innenradius des Aussenfittings 3 entspricht, kann ein Anecken während des Einschiebens des Innenfittings 2 am Aussenfitting vermieden werden. Durch das Abtrennen des mittleren Anschlussstutzens 4 weist das bearbeitete innenliegende Fitting 2 die Form eines geraden Rohres mit einer Öffnung auf und lässt sich problemlos über einen Anschlussstutzen 6 des Aussenfittings 3 einbringen bzw. einschieben, was in Figur 1D erkennbar ist. Die durch das Abtrennen entstandene Öffnung am Innenfitting 2 wird zum mittleren Anschlussstutzen 6 des Aussenfittings 3 hin ausgerichtet. Über den Anschlussstutzen 6 des Aussenfittings 3 wird der abgetrennte Anschlussstutzen 4 des Innenfittings 2 eingebracht und am bearbeiteten Innenfitting 2 angefügt. Der abgetrennte Anschlussstutzen 4 wird wieder an der Position des bearbeiteten Innenfittings 2 angebracht an der der Anschlussstutzen 4 vor dem Abtrennen angeordnet war. Dazu wird vorzugsweise der abgetrennte Anschlussstutzen 4, wie auch das bearbeitete Fitting 2 im Bereich der Öffnung und der abgetrennten Kontur 5 am Anschlussstutzen 4 mittels eines Heizelements 7 erwärmt. Hierzu wird das Heizelement 7 mit samt Anschlussstutzen 4 des Innenfittings 2 über den Anschlussstutzen 6 des Aussenfittings 3 dem bearbeiteten Innenfitting 2 zugeführt, was aus der Figur 1G zu erkennen ist. Es ist vorteilhaft, wenn das Heizelement 7 die beiden Trennflächen gleichzeitig erwärmt, was aus Figur 1H ersichtlich ist. Das Heizelement 7 weist dazu beidseitig die gleiche Kontur 5 auf wie am Anschlussstutzen 4 und am bearbeiteten Fitting 2. Sobald die beiden Trennflächen ausreichend erwärmt sind, wird das Heizelement 7 entfernt und die beiden erwärmten Trennflächen zusammengefügt, was aus den Figuren 1I und 1J ersichtlich ist. Damit das Innenfitting 2 konzentrisch im Aussenfitting 3 angeordnet ist, werden zwischen der äusseren Mantelfläche des Innenfittings 2 und der inneren Mantelfläche des Aussenfittings 3 Distanzelemente 8 angeordnet, was aus den Figuren 2 und 4 entnehmbar ist. Es hat sich als vorteilhaft gezeigt, dass an den aussenliegenden Stirnseiten des Innenfittings 2 Rohrstücke angebracht werden, damit die Stirnseiten des innenliegenden Fittings 2 die Stirnseite des aussenliegenden Fittings 3 leicht überragen. Dies vereinfacht das Anbringen des Doppelrohrfittings 1 in einer Doppelrohrleitung, da zuerst das Innenrohr verbunden wird und durch den Überstand besser zugänglich ist. Vorzugsweise werden die Rohrstücke 9 am bearbeiteten innenliegenden Fitting 2 und am abgetrennten Anschlussstutzen 4 vor dem Einbringen in das Aussenfitting 3 angebracht, vorzugsweise durch Schweissen. Gut ersichtlich ist, dass die Rohrstücke 9 in der Fig. 1B noch nicht am Fitting angeordnet sind, sondern erst in den Figuren 1C und ff. wo das Innenfitting 2 in das Aussenfitting 3 eingebracht wird.

Neben einem T-Stück ist dieses Herstellverfahren auch für ein Bogenstück bzw. Winkelstücke eines Doppelrohrfittings 1 anwendbar, wie aus den Figuren 3 und 4 ersichtlich. Das Verfahren erfolgt identisch, wobei bei einem Bogenstück auch die Möglichkeit besteht, die Kontur 5 zum Abtrennen des Anschlussstutzens 4 als geraden Schnitt, rechtwinklig zur Mittelachse des Anschlussstutzens 4 vorzusehen, da sich das bogenförmige, innenliegende Fitting 4 geneigt zum Aussenfitting 3, einführen lässt.

### Bezugszeichenliste

- 1: Doppelrohrfitting
- 2: Innenfitting
- 3: Aussenfitting
- 4: Anschlussstutzen Innenfitting
- 5: Kontur
- 6: Anschlussstutzen Aussenfitting
- 7: Heizelement
- 8: Distanzelement
- 9: Rohrstück

## Patentansprüche

1. Verfahren zum Herstellen eines Doppelrohrfittings (1), wobei das Doppelrohrfitting (1) ein innenliegendes Medium führendes Fitting (2) und ein aussenliegendes, das innenliegende, Medium führende Fitting (2) umgebendes Fitting (3) aufweist, beinhaltend folgende Schritte:
- Bereitstellen eines innenliegenden Fittings (2),
- Bearbeiten des innenliegenden Fittings (2) durch Abtrennen eines Anschlussstutzens (4),
- Anordnen des bearbeiteten innenliegenden Fittings (2) in einem aussenliegenden Fitting (3),
- Anbringen des abgetrennten Anschlussstutzens (4) am im aussenliegenden Fitting (3) bearbeiteten innenliegenden Fitting (2).

2. Verfahren nach Anspruch 1, **dadurch gekennzeichnet, dass** der abgetrennte Anschlussstutzen (4) an der abgetrennten Stelle des innenliegenden Fittings (2) zusammengefügt wird.

3. Verfahren nach einem der Ansprüche 1 oder 2, **dadurch gekennzeichnet, dass** der abgetrennte Anschlussstutzen (4) an der abgetrennten Stelle des innenliegenden Fittings (2) angeschweisst wird.

4. Verfahren nach einem der Ansprüche 1 bis 3, **dadurch gekennzeichnet, dass** das Abtrennen des Anschlussstutzens (4) entlang einer vorgegebenen Kontur (5) erfolgt.

5. Verfahren nach Anspruch 4, **dadurch gekennzeichnet, dass** die Kontur (5) am innenliegenden Fitting (2) dem Innenradius des aussenliegenden Fittings (3) entspricht.

6. Verfahren nach einem der Ansprüche 1 bis 5, **dadurch gekennzeichnet, dass** zum Anschweissen des Anschlussstutzens (4) am bearbeiteten innenliegenden Fitting (2) der Anschlussstutzen (4) und das bearbeitete Fitting (2) mittels eines Heizelements (7) erwärmt werden.

7. Verfahren nach einem der Ansprüche 1 bis 6, **dadurch gekennzeichnet, dass** das Erwärmen des Anschlussstutzens (4) und des bearbeiteten Fittings (2) synchron erfolgt.

8. Verfahren nach einem der Ansprüche 1 bis 7, **dadurch gekennzeichnet, dass** das innenliegende Fitting (2) mit Distanzelementen (8) im aussenliegenden Fitting (3) zentrisch platziert wird.

9. Verfahren nach einem der Ansprüche 1 bis 8, **dadurch gekennzeichnet, dass** das an den Anschlussstutzen des innenliegenden Fittings Rohrstücke angeschweisst werden.

10. Verfahren nach einem der Ansprüche 1 bis 9, **dadurch gekennzeichnet, dass** der Innendurchmesser des innenliegenden Fittings (2) einen Durchmesser von > 200 mm aufweist.

11. Verfahren nach einem der Ansprüche 1 bis 10, **dadurch gekennzeichnet, dass** das Doppelrohrfitting (1) als T-Stück oder Bogenstück ausgebildet ist.

12. Verfahren nach einem der Ansprüche 1 bis 11, **dadurch gekennzeichnet, dass** für das Verfahren zur Herstellung eins Doppelrohrfittings (1) ein innenliegendes Fitting (2) mit einem Innendurchmesser von 250 mm und ein aussenliegendes Fitting (3) mit einem Aussendurchmesser von 355 mm oder ein innenliegendes Fitting (2) mit einem Innendurchmesser von 315 mm und ein aussenliegendes Fitting (3) mit einem Aussendurchmesser von 450 mm verwendet wird.

13. Doppelrohrfitting (1) hergestellt nach dem Verfahren nach einem der Ansprüche 1 bis 11.
